# EUROPEAN PATENT APPLICATION

(11) **EP 1 203 545 A2**
(43) Date of publication of application: **08.05.2002**
(21) Application number: 01126208.6
(22) Date of filing: 05.11.2001
(51) Int. Cl.: A47B 77/02, B29C 67/24

(54) **Process for manufacturing bordered plates of agglomerated material, device to perform said process as well as a plate of agglomerated material with an anti-overflowing border obtained through said process**

(30) Priority: 06.11.2000 IT VR000113
(71) Applicant: Stone Italiana S.r.l., 37135 Verona (IT)
(72) Inventor: Dalla Valle, Roberto, 37012 Bussolengo (VR) (IT)
(74) Representative: Petraz, Gilberto Luigi

(57) **Abstract**

A process to obtain bordered plates of agglomerated material includes the following working phases:
- a first crushing phase of the several materials composing the agglomerate,
- a second mixing phase of said crushed materials, with the aim to obtain a product as homogeneous as possible, during which same binding resins are added to the mixture,
- a third pressing and compacting phase of the agglomerated material, during which a desired form is obtained;
- a fourth phase of hardening of the panel at a predetermined temperature.

The mould and the counter-mould being shaped in such a way as to define a panel or a plate comprising at least a raised border.

## Description

### TECHNICAL FIELD

The present invention relates to a process and the related equipment to obtain bordered plates madee of an agglomerated material.

More particularly, the present invention relates to an equipment for moulding an agglomerated material comprising crushed stone derivatives joined by means of binding materials, comprising such details to allow a production of bordered plates for cooking hobs or, generally, kitchen top planes.

According to an other aspect, the present invention relates to a top with an anti-overflowing border in particular for kitchen tops.

### BACKGROUND ART

It is known that plates of agglomerated material are usually manufactured according to the following procedure:
- a crushing phase of at least one stone based starting material,
- a mixing phase of the crushed stone based starting material and an inert filling material with some binding material,
- a pressing and vibrated-pressing phase under vacuum of the previously prepared mixture,
- an heating phase in oven at a predetermined temperature and for a predetermined time, with the aim to obtain a catalysed reaction of the binder,
- afterwards the obtained plates, at the exit of the baking phase undergo respective phases of polishing and/or cutting and/or chamfering and/or calibrating and/or flaring,
- as last phase said plates are sectioned to obtain pieces of predetermined shape.

A process like the previously described one allows panels or plates of agglomerated material to be obtained having precisely predetermined length, width and thickness, and it is realized in a continuous process by a suitable plant.

A drawback is related to the fact that the panels deriving from the moulding phase always require a further processing carried out by tool machines to realize the desired configuration of the finished product; particularly, where it is desidered to obtain one or more borders, it is necessary to mill of the central area of the plate and to remove rather large quantities of material.

Sometimes this final working can result in a large quantity of scrap and, taking into consideration that this is one of the last actions to be performed on the plate, this heavily weights upon the total production costs.

Furthermore, such shaving removal workings weight upon the overall production time and cause as well the production of powder and residues which are difficult to dispose.

### DESCRIPTION OF THE INVENTION

The present invention aims to provide for a process and the related equipment for the production of bordered plates in agglomerated material that sets aside or significantly reduces the previously remarked drawbacks.

Furthermore, the present invention aims to provide for a top with an anti-overflowing border that can be manufactured at a very low cost and with the lowest dispersion and consumption of starting material and working tools.

This is achieved by a process to obtain bordered plates having the features disclosed in the main claim.

Furthermore, this is achieved by an equipment having the features disclosed in claims 4 to 9.

According to a further aspect of the present invention, this is obtained by a top with an anti-overflowing border having the features disclosed in claims 10 to 12.

The dependent claims outline particularly advantageous forms of embodiment of the invention.

The process according to the invention is realized by the following phases:
- a first crushing phase of the several materials composing the agglomerate,
- a second mixing phase of the crushed materials during which some binding resins are added, with the aim to obtain a product as much homogeneous as possible,
- a third pressing and compacting phase of the agglomerated material, during which the desired form is obtained;
- a fourth phase of hardening of the panel at a predetermined temperature.

The pressing phase is performed in a way that the mould and the counter-mould are shaped to realize a plate comprising two opposing longitudinal borders so that a cut of the same plate along its own longitudinal axis allows two tops to be obtained, each one presenting a border on the side opposed to the cut one.

A process as the previously described one allows bordered plates or panels of agglomerated material to be obtained having precisely predetermined length, width and thickness, and realized in a continuous process by means of a dedicated plant.

The equipment for the realization of the process comprises a crushing group and a mixing group for the materials composing the agglomerate, a press directly connected to a moulding group which can possibly be heated, said moulding group being composed by a mould and a counter-mould having a such configuration suited to produce a plate comprising opposed longitudinal borders protruding from the same side of the same plate.

The top with the anti-overflowing border, particularly for kitchen tops, according to the invention, comprises a border only on one side obtained as a unique body with the same top without showing signs of the working procedure derived from the removal of the material from the original plate.

The production of a bordered top according to the invention requires a minimal waste of resources in terms of working time and use of starting material as well as of tools.

The top with anti-overflowing border leaves the molding group almost finished that only requires a possible polishing treatment.

### ILLUSTRATION OF DRAWINGS

Other features and advantages of the present invention will be more apparent by reading the following description of a form of embodiment of the invention, given as an example, with the help of the figures shown in the annexed drawing, where:
- Figure 1 is a frontal cross-section view, of a moulding group;
- Figure 2 shows a view similar to the one represented in figure 1, of another form of embodiment ;and
- Figure 3 is a perspective view slightly from above, of a top provided of an anti-overflowing border.

### DESCRIPTION OF A FORM OF EMBODIMENT

The process to obtain bordered plates of agglomerated material is achieved by means of the following phases:
- a first crushing phase of the several materials comprising the agglomerate,
- a second mixing phase of the crushed materials, with the aim to obtain a product as homogeneous as possible, during which binding resins are added,
- a third pressing and compacting phase of the agglomerated material, during which the desired form is obtained;
- a fourth phase of hardening of the panel at a predetermined temperature.

The pressing phase is performed in such a way that the mould and the counter-mould are shaped to realize a plate comprising two opposed longitudinal borders so that the cut of the same plate along its own longitudinal axis allows two tops to be achieved, each one presenting a border on the side opposed to the cut one.

The hardening phase, at a temperature higher than room temperature, is performed by conduction heating of some parts of the moulding group by means of either suitable electrical resistances or other means well known in the art.

Once the plate is extracted from the moulding group its surfaces can be polished.

A variant to the above described process is carried out by using a configuration of the mould and of the counter-mould such as to obtain, besides the lateral borders, other possible projections required to obtain a kitchen top.

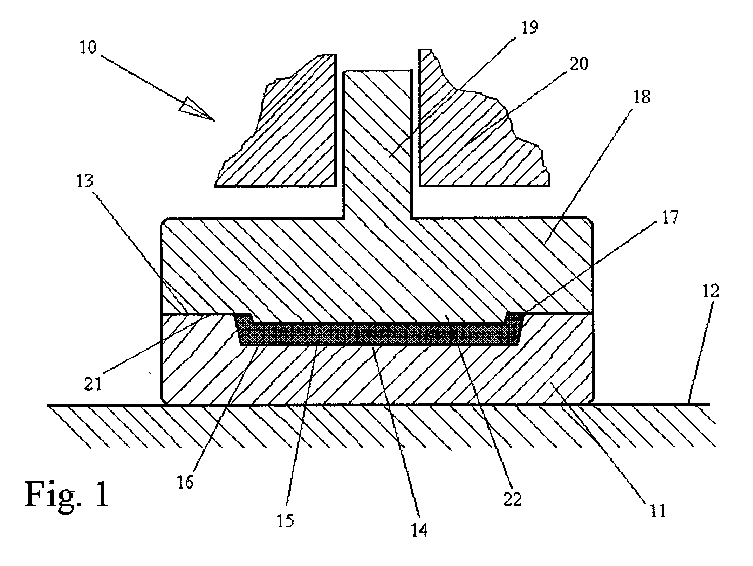

Firstly referring to figure 1, a moulding group according to the invention, generally indicated by reference sign 10, comprises a fixed mould 11 made of a matrix fixed to the ground 12, whose working surface 13 is provided of a hollow portion in its central part.

The hollow portion 14, defining the moulding chamber, is suitable for receiving the agglomerated material 15 and comprises a substantially laminar central portion 16 comprising two borders 17 protruding by the same side of the same portion 16 and directed towards a counter-mould 18.

To facilitate the extraction of the plate which is the final product of the compaction of the agglomerated material 15, the borders 17 can have their lateral surfaces slightly divergently inclined towards the outside of the hollow portion 14.

The counter-mould 18 is integral to the stem 19 of a press 20 and comprises, in the central portion of its surface 21 facing, in use, towards the moulding 11, a projecting punch 22 suitable for being partially inserted into the respective hollow portion 14 with the aim of compacting the agglomerated material 14.

According to this form of embodiment, the concavity of the obtained plate, defined by the borders 17, faces the counter-mould 18.

The compacting action is almost exclusively due to the penetration of the punch 22 inside the hollow portion 14.

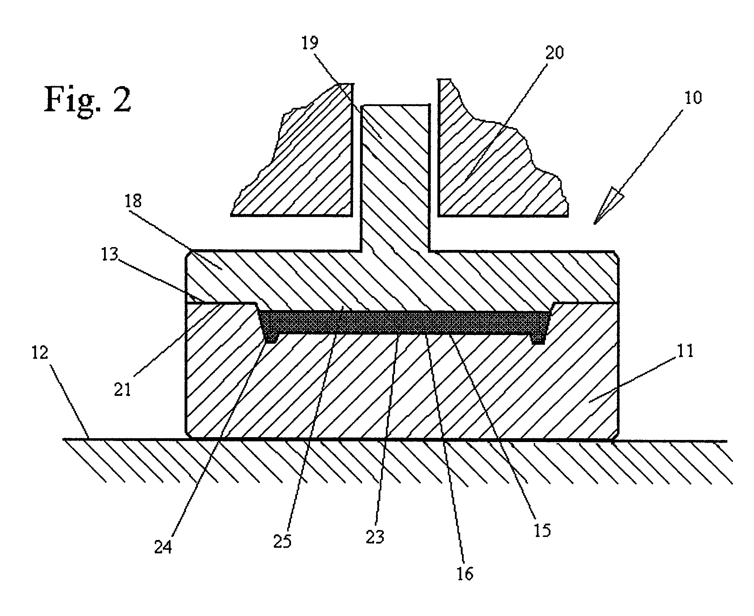

Referring to the alternative embodiment shown in figure 2, the mould 11 comprises, in its own central portion, a hollow portion 23 having lateral grooves 24 on two of its opposite sides.

The lateral surfaces of the grooves 24 are divergently inclined towards the counter-mould 18 in such a way to facilitate the extraction of the plate once the moulding is realized.

The counter-mould 18 comprises a punch 25 having a minimal jutting and suitable for being partially inserted into the hollow portion 23, fitting to the perimetral part of the same.

Unlike the previous form of embodiment, in this case the main compacting action is performed by the mould 11.

According to this form of embodiment, the concavity of the obtained plate, defined by grooves 24, faces mould 11.

As a further alternative embodiment (not shown in the drawings), it is possible to fix both mould and the counter-mould to a second press and to perform the moulding phase by simultaneously moving the mould 11 and the counter-mould 18 towards each other.

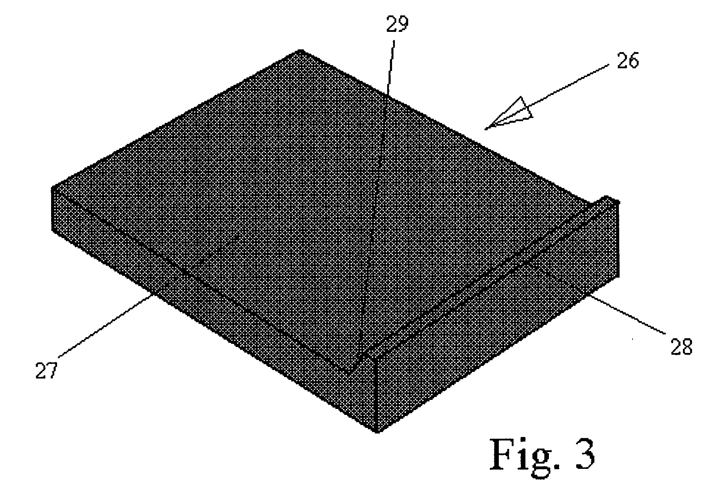

In figure 3, reference sign 26 generally designates a top with an anti-overflowing border.

The top 26 comprises a plate 27 having, in correspondence of a side thereof, a border 28 obtained as one piece body with the top 26, without showing any signs as scratches derived from removal of material from an original plate.

The border 28 can comprise at least a longitudinal side face 29 that is inclined towards the outside of the top 26 in the direction moving away from plate 27.

The surface of top 26 can be inclined in respect of a horizontal plane.

According to alternative forms of embodiment not reported in the drawings, the top 26 can be provided of projections jutting from plate 27, always realized as a one piece body and without any scratches derived from the working process due to material removal.

The invention was previously described with reference to a preferred form of embodiment of the same.

However it is clear that the present invention includes several variants falling within the scope of the present invention, in the field of the technical equivalences.

By way of example it is clear that the invention encompasses both forms of embodiment, where the mould and/or the counter-mould are realized as a whole with the press, and where the mould and/or counter-mould are realized as independent elements, fixed to the jaws of the press by fixing and blocking means well known in the art.

## Claims

1. Process to obtain bordered plates of agglomerated material where the following phases are carried out:
- a first crushing phase of the several materials composing the agglomerate,
- a second mixing phase of said crushed materials, with the aim to obtain a product as homogeneous as possible, during which same binding resins are added to the mixture,
- a third pressing and compacting phase of the agglomerated material, during which a desired form is obtained;
- a fourth phase of hardening of the panel at a predetermined temperature,
the mould and the counter-mould being shaped in such a way as to define a panel or a plate comprising at least a raised border.

2. Process according to claim 1, **characterized in that** the mould and the counter-mould are formed in such a way as to define a panel or a plate comprising two raised opposed longitudinal borders so that cutting of the same panel or plate along its longitudinal axis allows results in two tops each one provided of a border on the side opposed the cut one.

3. Equipment to obtain bordered plates of agglomerated material which comprises a crushing group and a mixing group for the materials composing the agglomerate, at least a heatable press (20) directly connected to a moulding group (10), **characterized in that** said moulding group (10) is constituted by a mould (11) and a counter-mould (18) having a substantially planar moulding surface and at least a hollow cavity in correspondence of at least one side, in such a way as to obtain a plate comprising a raised border.

4. Equipment according to claim 3, **characterized in that** said counter-mould (18) is directly connected to said press (20) and said mould (11) is fixed.

5. Equipment according to claim 3, **characterized in that** said counter-mould (18) and said mould (11) are directly connected to respective presses.

6. Equipment according to any of the claims from 3 to 5, **characterized in that** said mould (11) comprises a hollow cavity (14) suitable for receiving, in use, a respective punch (15) of said counter-mould (18).

7. Equipment according to any of the claims from 3 to 6, **characterized in that** the lateral surfaces of said grooves (24) are divergently inclined towards the counter-mould (18).

8. Plate or panel (26) with anti-overflowing border, particularly for kitchen top, **characterized in that** it is obtained by means of a process according to anyone of claims 1 and 2.

9. Plate or panel (26) according to claim 8, **characterized in that** at least one lateral longitudinal face (29) of said border (28) is inclined towards the outside in the direction moving away from the same plate or panel (26).

10. Plate or panel (26) according to any of the claims from 8 to 9, **characterized in that** the plane surface of the kitchen top (27) is inclined in respect of a horizontal plane.

11. Plate or panel (26) according to any of the claims from 8 to 11, **characterized in that** it comprises raised projections integral to said plate or panel, without showing scratches derived from the removal of material.
